# EUROPÄISCHE PATENTANMELDUNG

(11) **EP 3 709 242 A1**
(43) Veröffentlichungstag der Anmeldung: **16.09.2020**
(21) Anmeldenummer: 20163128.0
(22) Anmeldetag: 13.03.2020
(51) Int. Cl.: G06Q 10/08

(54) **SYSTEM ZUM AUTOMATISCHEN ERFASSEN VON KENNUNGEN VON ÜBEREINANDER ANGEORDNETEN WIEDERVERWENDBAREN LEBENSMITTELBEHÄLTERN**

(30) Priorität: 14.03.2019 DE 102019106577
(71) Anmelder: Rieber AG, 8360 Eschlikon (CH)
(72) Erfinder: Maier, Max, 71636 Ludwigsburg (DE)
(74) Vertreter: Schumacher & Willsau

(57) **Zusammenfassung**

Die Erfindung betrifft ein System (10) zum automatischen Erfassen von Kennungen (12) von übereinander angeordneten wiederverwendbaren Lebensmittelbehältern (14), mit einer mobilen Plattform (16) und mit einer daran befestigten Erfassungseinrichtung (18), die mit Hilfe zumindest eines Motors (20) zumindest in vertikaler Richtung verfahrbar ist, um die einzelnen Kennungen (12) zu erfassen.

## Beschreibung

Die vorliegende Erfindung betrifft ein System zum automatischen Erfassen von Kennungen von übereinander angeordneten wiederverwendbaren Lebensmittelbehältern. Die wiederverwendbaren Lebensmittelbehälter können insbesondere sogenannte Gastronorm-Behälter sein. Bei dem Gastronorm-System handelt es sich um ein weltweit gebräuchliches Behältersystem, das durch die Verwendung genormter Größen einen einfachen Austausch von Lebensmittelbehältern ermöglicht und das beispielsweise in lebensmittelverarbeitenden Betrieben sowie in Großküchen Verwendung findet. Ein Gastronorm-Behälter ist demnach ein Behälter, der sich vorwiegend zum Zubereiten und Bereithalten von warmen und kalten Speisen, aber auch zum Aufbewahren von Lebensmitteln aller Art eignet. Die Behälter sind beispielsweise aus Edelstahl, Aluminium, Glas oder Porzellan. Gastronorm-Behälter sind in der Regel ineinander stapelbar, spülmaschinenfest und so robust, dass sie auch bei täglicher intensiver Benutzung in einer Großküche lange verwendet werden können, ohne beschädigt zu werden.

Insbesondere um die Anforderungen des HACCP-Konzepts (HACCP = Hazard Analysis and Critical Control Points) zu erfüllen, werden zunehmend intelligente Food-Flow-Systeme eingesetzt, wie beispielsweise das °CHECK®-System der Firma Rieber. Das Ziel dieses Systems besteht darin, die HACCP-relevanten Daten nicht mehr manuell auf Papier festzuhalten und in Ordnern abzulegen, sondern diese Daten digital zu erfassen und an eine vorzugsweise zentrale Datenbank weiterzugeben. Dies spart Zeit, senkt die Kosten und gibt den Verantwortlichen die Möglichkeit, die relevanten Vorgänge in Echtzeit zu überprüfen und gegebenenfalls zu handeln. Beispielsweise ist es möglich, jederzeit zu überprüfen, welche Speisen sich wo, mit welcher Temperatur befinden und wie die jeweilige Hygienesituation ist. Um dies zu ermöglichen, ist es erforderlich, die verwendeten Gastronorm-Behälter mithilfe eines geeigneten Codes eindeutig identifizieren zu können. Um Gastronorm-Behälter eindeutig identifizieren zu können, schlägt die WO 2007/042248 A1 bereits vor, die Gastronorm-Behälter mit RFID-Transpondern auszustatten, die bei der Herstellung der Gastronorm-Behälter in deren Böden oder Seitenwände integriert werden. Ein derartiger RFID-Transponder stellt jedoch keinen optisch erfassbaren Code dar, sondern einen (intelligenten) Speicherchip, der berührungslos mit speziell dafür vorgesehenen externen Geräten kommuniziert. Die Nutzung der RFID-Technologie im Zusammenhang mit Gastronorm-Behältern ist daher relativ kostenintensiv. Weiterhin weisen RFID-Transponder in der Regel eine eingeschränkte Temperaturbeständigkeit auf, was insbesondere bei der Zubereitung von Speisen zu Problemen führen kann.

Um die mit RFID-Transpondern verbundenen Probleme zu umgehen, setzt beispielsweise das °CHECK®-System der Firma Rieber auf optisch erfassbare Codes, insbesondere in Form von QR-Codes. Diese QR-Codes können beispielsweise mit handelsüblichen Smartphones erfasst werden, die mit einer zentralen Datenbank in Verbindung stehen oder gebracht werden können, wo die relevanten Daten verwaltet werden. Obwohl dieser Rückgriff auf ohnehin vorhandenes technisches Equipment zur Kostensenkung beiträgt, kann diese Vorgehensweise dort an ihre Grenzen stoßen, wo eine sehr große Anzahl von Gastronorm-Behältern in kurzer Zeit abgefertigt werden muss. So gibt es beispielsweise Großküchen, die 5000 oder mehr Mahlzeiten pro Tag zubereiten und ausgeben. Derartige Großküchen finden sich beispielsweise im Ausbildungs-, Medizin- oder Militärbereich, aber auch in großen Hotels oder auf Kreuzfahrtschiffen. Zum Transport oder zur Aufbewahrung der beispielsweise in Form der genannten Gastronorm-Behälter vorliegenden wiederverwendbaren Lebensmittelbehälter werden diese in der Regel übereinander angeordnet, beispielsweise in geeigneten stationären oder mobilen Regalen oder in thermisch isolierten Transportboxen, wie sie beispielsweise von der Firma Rieber unter der Bezeichnung Thermoport® angeboten werden.

Der Erfindung liegt die Aufgabe zugrunde, ein System anzugeben, mit dem es auch in Fällen, in denen eine sehr große Anzahl von wiederverwendbaren Lebensmittelbehältern in kurzer Zeit abgefertigt werden muss, möglich ist, eine sichere und vor allem schnelle Erfassung der einzelnen Kennungen der wiederverwendbaren Lebensmittelbehälter zu ermöglichen.

Diese Aufgabe wird durch die im Anspruch 1 angegebenen Merkmale gelöst. Vorteilhafte Ausgestaltungen und Weiterbildungen der Erfindung ergeben sich aus den Unteransprüchen.

Die der Erfindung zugrundeliegende Aufgabe wird demnach durch ein System zum automatischen Erfassen von Kennungen von übereinander angeordneten wiederverwendbaren Lebensmittelbehältern gelöst, wobei das System eine mobile Plattform und eine daran befestigte Erfassungseinrichtung umfasst, die mithilfe zumindest eines Motors zumindest in vertikaler Richtung verfahrbar ist, um die einzelnen Kennungen zu erfassen. Durch diese Lösung können die Kennungen von beispielsweise bis zu 16 in einem Regalwagen übereinander angeordneten Gastronorm-Behältern in beispielsweise weniger als fünf Sekunden erfasst werden. Dabei kann das vertikale Verfahren der Erfassungseinrichtung beispielsweise über eine Linearführung mit Zahnriemenantrieb erfolgen, wobei natürlich auch andere Lösungen wie beispielsweise Gewindespindeln, Linearmotoren usw. denkbar sind. Die Erfindung bringt nicht nur bei der Abfertigung von mit Lebensmitteln gefüllten wiederverwendbaren Lebensmittelbehältern große Vorteile mit sich, sondern auch bei der Rücknahme solcher (dann in der Regel leeren) wiederverwendbaren Lebensmittelbehälter, beispielsweise an Spül- oder Sammelstationen. Denn auch bei der Rücknahme der wiederverwendbaren Lebensmittelbehälter können Fälle auftreten, in denen hunderte bis tausende solcher wiederverwendbaren Lebensmittelbehälter, also beispielsweise ganze LKW-Ladungen, auf einmal an einem Ort eintreffen. Durch das erfindungsgemäße System kann dann zumindest halbautomatisch, jedenfalls sehr schnell festgestellt werden, welche wiederverwendbaren Lebensmittelbehälter von welchem Einsatz beziehungsweise Kunden zurück sind. Dies ermöglicht es beispielsweise, mithilfe einer zentralen Datenbank ständig einen aktuellen Überblick darüber zu haben, welcher wiederverwendbare Lebensmittelbehälter sich gerade wo befindet.

Obwohl die Erfindung auch bei direkt übereinander gestapelten wiederverwendbaren Lebensmittelbehältern zum Einsatz kommen kann, werden Lösungen bevorzugt, bei denen das System eine Haltevorrichtung aufweist, in der die wiederverwendbaren Lebensmittelbehälter übereinander angeordnet werden können. Wie erwähnt kann es sich bei solchen Haltevorrichtungen beispielsweise um feststehende Regale, Regalwagen oder Transportboxen handeln. Es liegt auf der Hand, dass sich im Hinblick auf das Handling große Vorteile ergeben, wenn die übereinander angeordneten wiederverwendbaren Lebensmittelbehälter einzeln entnommen werden können, ohne dass ein Umstapeln erforderlich ist.

In diesem Zusammenhang wird es als vorteilhaft erachtet, dass die Haltevorrichtung Auflager für überstehende Ränder der wiederverwendbaren Lebensmittelbehälter aufweist. Diese Lösung ermöglicht es, dass unterschiedlich hohe wiederverwendbare Lebensmittelbehälter in die Haltevorrichtung eingebracht werden, wobei sich ein wiederverwendbarer Lebensmittelbehälter an mehreren vertikal übereinander vorgesehenen Auflagern vorbeierstecken kann.

Da das Gastronorm-System wie erwähnt ein weltweit äußerst verbreitetes System ist, wird es in diesem Zusammenhang besonders bevorzugt, dass die Auflager einen an das Gastro-Norm-Maß angepassten Abstand aufweisen. Das Grundmaß der Gastronorm (häufig auch als GN) 1/1 beträgt 325 x 530 mm im Seitenverhältnis, eine Annäherung an den sogenannten Goldenen Schnitt. Kleinere Maße werden in Brüchen relativ zur Fläche des Grundmaßes angegeben. Folgende Größen sind üblich:

| **Bezeichnung** | **L/GL:B/GB** | **L(änge) (mm)** | **B(reite) (mm)** | **Fläche (dm²)** | **Seitenverhältnis L/B** |
|---|---|---|---|---|---|
| 2/8 | ¼:1 | 132 | 325 | 04,3 | 2,46 |
| 2/4 | 1:½ | 530 | 162 | 08,6 | 3,27 |
| 2/3 | 2/3: 1 | 354 | 325 | 11,5 | 1,09 |
| 2/1 | 1:2 | 530 | 650 | 34,5 | 1,23 |
| 1/9 | ⅓:⅓ | 176 | 108 | 01,9 | 1,63 |
| 1/6 | ⅓:½ | 176 | 162 | 02,9 | 1,09 |
| 1/4 | ½:½ | 265 | 162 | 04,3 | 1,63 |
| 1/3 | ⅓:1 | 176 | 325 | 05,7 | 1,85 |
| 1/2 | ½:1 | 265 | 325 | 08,6 | 1,23 |
| 1/1 | 1:1 | 530 | 325 | 17,2 | 1,63 |

Dabei sind die Größen 2/4 beziehungsweise 2/8 zwar jeweils flächengleich mit 1/2 beziehungsweise ¼, jedoch nicht deckungsgleich. Durch eine andere Teilung ergibt sich zwar die gleiche Relation zum Grundmaß, aber andere Außenabmessungen (und demnach andere Kombinationsmöglichkeiten). Jedenfalls ermöglicht es beispielweise ein an das 1/1-Gastronorm-Maß angepasster Regalwagen, dass pro Etage entweder ein 1/1-Gastronorm-Behälter oder drei 1/3-Gastronorm-Behälter oder ein 2/3-Gastronorm-Behälter und ein 1/3-Gastronorm-Behälter oder zwei 1/2-Gastronorm-Behälter eingeschoben werden.

Wie erwähnt, wird es besonders bevorzugt, dass die Haltevorrichtung ein Regalwagen ist, da derartige Regalwagen eine maximale Mobilität ermöglichen. Wie ebenfalls bereits erwähnt, schließt dies den zusätzlichen oder alternativen Einsatz von stationären Regalen jedoch keinesfalls aus.

Insbesondere in Fällen, in denen gekühlte oder erwärmte Speisen transportiert werden müssen, kann in vorteilhafter Weise vorgesehen sein, dass die Haltevorrichtung eine thermisch isolierte Transportbox ist.

Gemäß einer vorteilhaften Weiterbildung der Erfindung ist vorgesehen, dass die mobile Plattform manuell horizontal verfahrbar ist und einen Abstandhalter aufweist, um mit einem definierten Abstand zu übereinander angeordneten wiederverwendbaren Lebensmittelbehältern positioniert zu werden. Ein derartiger Abstandhalter kann beispielsweise in Form eines horizontal angeordneten U-förmigen Elements ausgebildet sein, wobei sich die freien Schenkel des U dann in Richtung auf die übereinander angeordneten wiederverwendbaren Lebensmittelbehälter erstrecken. Durch den definierten Abstand kann beispielsweise eine optische Brennweite der Erfassungseinrichtung berücksichtigt werden. Außerdem kann es insbesondere bei der Rücknahme von noch nicht gespülten wiederverwendbaren Lebensmittelbehältern nicht ausgeschlossen werden, dass die wiederverwendbaren Lebensmittelbehälter (auch) äußerlich verschmutzt sind, so dass ein direkter Kontakt der mobilen Plattform beziehungsweise der ihr zugeordneten Komponenten mit den wiederverwendbaren Lebensmittelbehältern aus Hygienegründen vermieden werden sollte. Es ist auch denkbar, dass der Abstandhalter abnehmbar und/oder verschwenkbar beziehungsweise wegklappbar ausgestaltet ist, so dass er beispielsweise im Falle von sauberen (gegebenenfalls noch zu etikettierenden, siehe unten) wiederverwendbaren Lebensmittelbehältern nicht zum Einsatz kommt, sondern nur bei eventuell verschmutzten wiederverwendbaren Lebensmittelbehältern verwendet wird.

Gemäß einer besonders bevorzugten Weiterbildung der Erfindung ist vorgesehen, dass der mobilen Plattform weiterhin ein Etikettendrucker zugeordnet ist, um wiederverwendbaren Lebensmittelbehältern in Abhängigkeit von ihren erfassten Kennungen Etiketten zuordnen zu können. Während es sich bei den Kennungen der wiederverwendbaren Lebensmittelbehälter in der Regel um nur maschinenlesbare Kennungen handelt, sind die Etiketten vorzugsweise zumindest teilweise menschenlesbar. Insbesondere kann auf diesen Etiketten angegeben werden, welchen Inhalt der wiederverwendbare Lebensmittelbehälter aktuell hat und/oder wie dieser Inhalt zu behandeln ist. Bei den Etiketten kann es sich beispielsweise um Klebeetiketten handeln, die vorzugsweise einfach rückstandsfrei wieder zu entfernen sind. Natürlich können die Etiketten zusätzlich oder alternativ auch mit anderen Angaben versehen werden, beispielsweise dem vorgesehenen Empfänger des wiederverwendbaren Lebensmittelbehälters. Solche Angaben können beispielsweise im Bereich des Home-Lieferservice sinnvoll sein, wenn in ein und derselben Haltevorrichtung wiederverwendbare Lebensmittelbehälter für verschiedene Empfänger aufbewahrt und/oder transportiert werden.

Im Rahmen eines weiteren Automatisierungsschrittes kann es in diesem Zusammenhang vorgesehen sein, dass der Etikettendrucker zusammen mit der Erfassungseinrichtung vertikal verfahrbar und dazu eingerichtet ist, zumindest einige der wiederverwendbaren Lebensmittelbehälter in Abhängigkeit von ihrer erfassten Kennung automatisch mit zumindest einem Etikett zu versehen. Dabei ist es beispielsweise denkbar, dass die Erfassungseinrichtung die übereinander angeordneten wiederverwendbaren Lebensmittelbehälter von oben nach unten abarbeitet und dass zumindest der Ausgabeschlitz des Etikettendruckers über der Erfassungseinrichtung angeordnet ist, so dass zumindest bei der Verwendung von wiederverwendbaren Lebensmittelbehältern mit gleicher Höhe der oberste wiederverwendbare Lebensmittelbehälter mit einem Etikett versehen wird, während die Erfassungseinrichtung den darunter angeordneten wiederverwendbaren Lebensmittelbehälter erfasst.

Zusätzlich oder alternativ zu der vorstehend erläuterten Etikettierlösung kann zumindest bei einigen Ausführungsformen vorteilhaft sein, dass der mobilen Plattform weiterhin ein Etikettendrucker zugeordnet ist, um der Haltevorrichtung in Abhängigkeit von den erfassten Kennungen der wiederverwendbaren Lebensmittelbehälter ein oder mehrere Etiketten zuordnen zu können. Sofern sowohl die einzelnen wiederverwendbaren Lebensmittelbehälter als auch die Haltevorrichtung mit Etiketten versehen werden sollen, ist es aus Kostengründen natürlich vorteilhaft, wenn zu diesem Zweck nur ein Etikettendrucker vorgesehen wird, der beispielsweise wählbare Ausgabeschlitze aufweisen oder beispielsweise verschwenkbar angeordnet sein kann. Ohne darauf beschränkt zu sein, bietet sich eine Etikettierung der Haltevorrichtung insbesondere dann an, wenn alle in einer Haltevorrichtung angeordneten wiederverwendbaren Lebensmittelbehälter zum gleichen Ort transportiert werden sollen. In diesem Fall kann die Haltevorrichtung beispielsweise mit Etiketten versehen werden, die (zumindest auch) Informationen nach Art eines Lieferscheins enthalten. Da nicht unbedingt klar ist, welche Seite der Haltevorrichtung beim Empfänger im freien Sichtfeld liegt, werden vorzugsweise mehr als eine Seitenfläche mit entsprechenden Etiketten versehen, wobei das Anbringen der Etiketten im einfachsten Fall manuell erfolgen kann, beispielsweise durch Aufkleben. Das Erfassen der einzelnen Kennungen der in ein und derselben Haltevorrichtung angeordneten wiederverwendbaren Lebensmittelbehälter ermöglicht es beispielsweise, dass vor dem Ausdrucken eines (zumindest auch) lieferscheinartigen Etiketts überprüft wird, ob tatsächlich alle wiederverwendbaren Lebensmittelbehälter zu dieser Lieferung gehören und/oder ob alle erforderlichen wiederverwendbaren Lebensmittelbehälter vorhanden sind. Diese Überprüfung kann beispielsweise durch einen Zugriff auf eine Datenbank erfolgen, die die jeweiligen Informationen enthält.

Auch im Hinblick auf die Beschriftung der Haltevorrichtungen sind die Etiketten wie erwähnt nicht auf den lieferscheinähnlichen Charakter beschränkt. Vielmehr kann beispielsweise in vorteilhafter Weise vorgesehen sein, dass der Etikettendrucker dazu eingerichtet ist, Etiketten mit Informationen über die vertikalen Positionen der in der Haltevorrichtung angeordneten wiederverwendbaren Lebensmittelbehälter auszudrucken. Diese Lösung ist insbesondere dann vorteilhaft, wenn sich in ein und derselben Haltevorrichtung wiederverwendbare Lebensmittelbehälter mit unterschiedlichen Inhalten befinden und ein Benutzer einen bestimmten Inhalt benötigt. Denn dann ist es nicht erforderlich, die Inhalte der einzelnen wiederverwendbaren Lebensmittelbehälter in Augenschein zu nehmen, bis der gesuchte Inhalt gefunden wird, sondern es kann gezielt auf die jeweilige Etage zugegriffen werden.

Um das erfindungsgemäße System möglichst flexibel zu machen, ist vorgesehen, dass der mobilen Plattform weiterhin ein Computer mit einer Mensch/Maschine-Schnittstelle zugeordnet ist. Der Computer kann alle oder zumindest einige der der mobilen Plattform zugeordneten Komponenten steuern. Bei der Mensch/Maschine-Schnittstelle kann es sich beispielsweise um einen Touchscreen handeln, was besonders bevorzugt wird. Dies schließt jedoch den Einsatz anderer Schnittstellenelemente nicht aus, und es können alle dem Fachmann gut bekannte Schnittstellenarten zum Einsatz kommen, beispielsweise Tastatur, Zeigegerät, Spracheingabesystem und dergleichen.

Ohne darauf beschränkt zu sein, und wie dies eingangs bereits angedeutet wurde, wird bevorzugt, dass die Kennungen QR-Codes und/oder Bar-Codes sind, wobei die Erfassungseinrichtung daran angepasste Lesemittel umfasst. Die Verwendung eines QR-Codes bietet dabei den Vorteil, dass eine deutlich höhere Informationsmenge gespeichert beziehungsweise abgerufen werden kann.

Um eine möglichst einfache und sichere Verwendung des erfindungsgemäßen Systems zu ermöglichen, ist vorzugsweise vorgesehen, dass der mobilen Plattform weiterhin ein Akku zugeordnet ist. Zwar könnte die Stromversorgung theoretisch auch kabelgebunden erfolgen, jedoch ergäbe sich dann eine gewisse Stolper- und damit Unfallgefahr. Weiterhin ermöglicht es die Verwendung eines Akkus, dass die mobile Plattform beispielsweise problemlos in einen LKW gebracht und dort verwendet werden kann, ohne dass größere Verkabelungsmaßnahmen erforderlich sind.

Obwohl auch diesbezüglich selbstverständlich kabelgebundene Lösungen nicht ausgeschlossen sind, wird bevorzugt, dass der mobilen Plattform weiterhin eine drahtlose Datenschnittstelle zugeordnet ist, über die die mobile Plattform Daten mit einer Datenbank austauschen kann, wobei die Datenbank zumindest für einige der Kennungen eine oder mehrere der folgenden Angaben enthält: Besitzer des wiederverwendbaren Lebensmittelbehälters, Eigentümer des wiederverwendbaren Lebensmittelbehälters, aktuelle übergeordnete Verpackungseinheit des wiederverwendbaren Lebensmittelbehälters, Inhalt des wiederverwendbaren Lebensmittelbehälters, Solltemperatur des Inhalts des wiederverwendbaren Lebensmittelbehälters, Isttemperatur des Inhalts des wiederverwendbaren Lebensmittelbehälters, Mindesthaltbarkeitsdatum des Inhalts des wiederverwendbaren Lebensmittelbehälters, Weiterverarbeitungsvorschriften für den Inhalt des wiederverwendbaren Lebensmittelbehälters, Zieladresse des wiederverwendbaren Lebensmittelbehälters, Heimatadresse des wiederverwendbaren Lebensmittelbehälters. Die drahtlose Datenschnittstelle kann nach irgendeinem geeigneten Standard arbeiten, beispielsweise einem Bluetooth-Standard oder einem WiFi-Standard. Bei der Datenbank kann es sich insbesondere um das von der Firma Rieber angebotene °CHECK®-System handeln, das eine Speicherung zumindest einiger der genannten Angaben ohnehin vorsieht. Insbesondere wenn die mobile Plattform zusätzlich zu den genannten Komponenten mit Temperaturfühlern ausgestattet ist, kann die Beachtung des HACCP-Protokolls auch im Hinblick auf die Lagerung und/oder den Transport von Lebensmitteln erstreckt werden. In diesem Zusammenhang kann es vorteilhaft sein, wenn auf Temperaturfühler zurückgegriffen wird, die einen entsprechenden Temperaturwert liefern, ohne dass der wiederverwendbare Lebensmittelbehälter geöffnet werden muss. Beispielsweise ist es denkbar, über die Außentemperatur der wiederverwendbaren Lebensmittelbehälter auf die Temperaturen der entsprechenden Inhalte zu schließen.

Die vorliegende Erfindung wird im Folgenden in Bezugnahme auf die Zeichnungen beispielhaft erläutert, wobei gleiche Bezugszeichen gleiche oder gleichartige Teile bezeichnen.

Es zeigen:
- Figur 1: eine perspektivische Darstellung einer Haltevorrichtung in Form eines ersten Regalwagens mit Einschubfächern für bis zu 16 Gastronorm-Behälter als wiederverwendbare Lebensmittelbehälter;
- Figur 1a: das Detail A von Figur 1;
- Figur 2: eine perspektivische Darstellung einer Haltevorrichtung in Form eines zweiten Regalwagens mit Einschubfächern für bis zu 32 Gastronorm-Behälter als wiederverwendbare Lebensmittelbehälter;
- Figur 2a: das Detail A von Figur 2;
- Figur 3: eine perspektivische Darstellung einer Haltevorrichtung in Form einer Transportbox mit Einschubfächern für bis zu 30 (dann sehr niedrige) Gastronorm-Behälter als wiederverwendbare Lebensmittelbehälter;
- Figur 3a: das Detail A von Figur 3;
- Figur 4a: eine Seitenansicht einer Ausführungsform der erfindungsgemäßen mobilen Plattform;
- Figur 4b: eine Vorderansicht der mobilen Plattform von Figur 4a;
- Figur 4c: die andere Seitenansicht der mobilen Plattform von Figur 4a;
- Figur 4d: eine Draufsicht der mobilen Plattform von Figur 4a;
- Figur 5: eine perspektivische Darstellung der mobilen Plattform von Figur 4a;
- Figur 5a: eine weitere perspektivische Darstellung der mobilen Plattform von Figur 4a;
- Figur 6: eine perspektivische Darstellung eines erfindungsgemäßen Systems, bestehend aus dem Regalwagen von Figur 1 und der mobilen Plattform aus den Figuren 4a bis 5a;
- Figur 6a: das System von Figur 6 in einer weiteren perspektivischen Darstellung;
- Figur 7: eine perspektivische Darstellung eines erfindungsgemäßen Systems, bestehend aus dem Regalwagen von Figur 2 und der mobilen Plattform aus den Figuren 4a bis 5a;
- Figur 7a: das System von Figur 7 in einer weiteren perspektivischen Darstellung;
- Figur 8: eine perspektivische Darstellung eines erfindungsgemäßen Systems, bestehend aus der Transportbox von Figur 3 und der mobilen Plattform aus den Figuren 4a bis 5a; und
- Figur 8a: das System von Figur 8 in einer weiteren perspektivischen Darstellung.

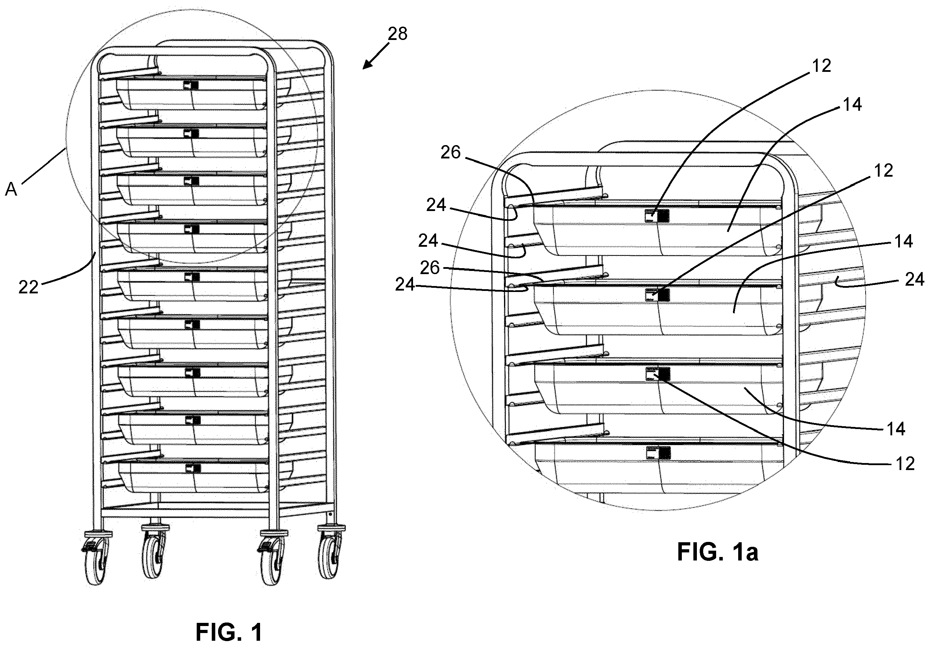

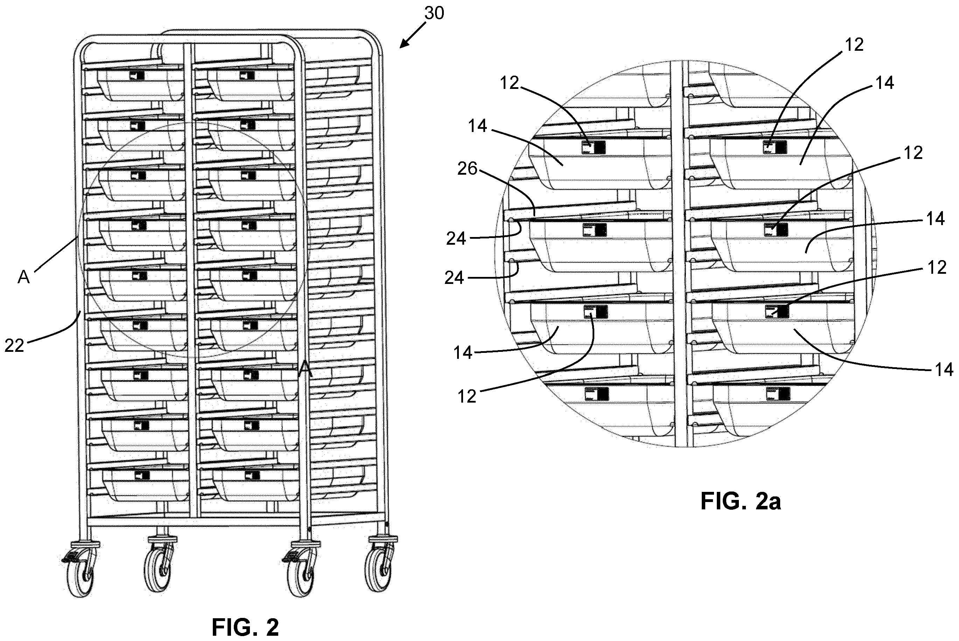

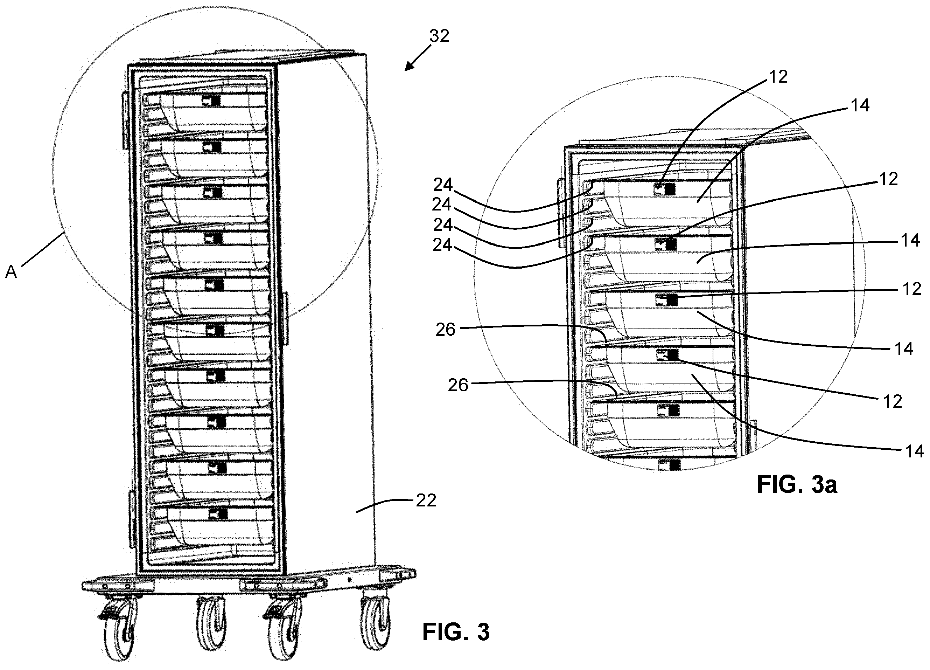

Figur 1 zeigt eine perspektivische Darstellung einer Haltevorrichtung 22 in Form eines ersten Regalwagens 28 mit Einschubfächern für bis zu 16 Gastronorm-Behälter als wiederverwendbare Lebensmittelbehälter, Figur 1a zeigt das Detail A von Figur 1, Figur 2 zeigt eine perspektivische Darstellung einer Haltevorrichtung 22 in Form eines zweiten Regalwagens 30 mit Einschubfächern für bis zu 32 Gastronorm-Behälter als wiederverwendbare Lebensmittelbehälter, Figur 2a zeigt das Detail A von Figur 2, Figur 3 zeigt eine perspektivische Darstellung einer Haltevorrichtung 22 in Form einer ersten Transportbox 32 mit Einschubfächern für bis zu 30 (dann sehr niedrige) Gastronorm-Behälter als wiederverwendbare Lebensmittelbehälter und Figur 3a zeigt das Detail A von Figur 3.

Den Figuren 1 bis 3a ist somit gemeinsam, dass sie alle Haltevorrichtungen 22 für das erfindungsgemäße System beziehungsweise jeweilige Details zeigen. In den Haltevorrichtungen 22 sind jeweils wiederverwendbare Lebensmittelbehälter 14 in Form von Gastronorm-Behältern übereinander angeordnet. Wie alle Gastronorm-Behälter weisen die wiederverwendbaren Lebensmittelbehälter 14 jeweils überstehende Ränder 26 auf, mit denen sie auf jeweiligen Auflagern 24 der Haltevorrichtungen 22 aufliegen. Jeder wiederverwendbare Lebensmittelbehälter 14 ist mit einer eindeutigen Kennung 12 ausgestattet, die im dargestellten Fall durch einen eindeutigen QR-Code gebildet ist. Während die Regalwagen 28, 30 mit jeweils vier arretierbaren Laufrädern ausgestattet sind, ist die Transportbox 32 auf einer Art Rollbrett angeordnet, von dem sie bei Bedarf gelöst werden kann. Die Transportbox 32 ist in der Praxis mit einer thermisch isolierenden Tür verschließbar, die bezüglich den Figuren 3 und 3a als durchsichtig oder nicht dargestellt aufgefasst werden kann.

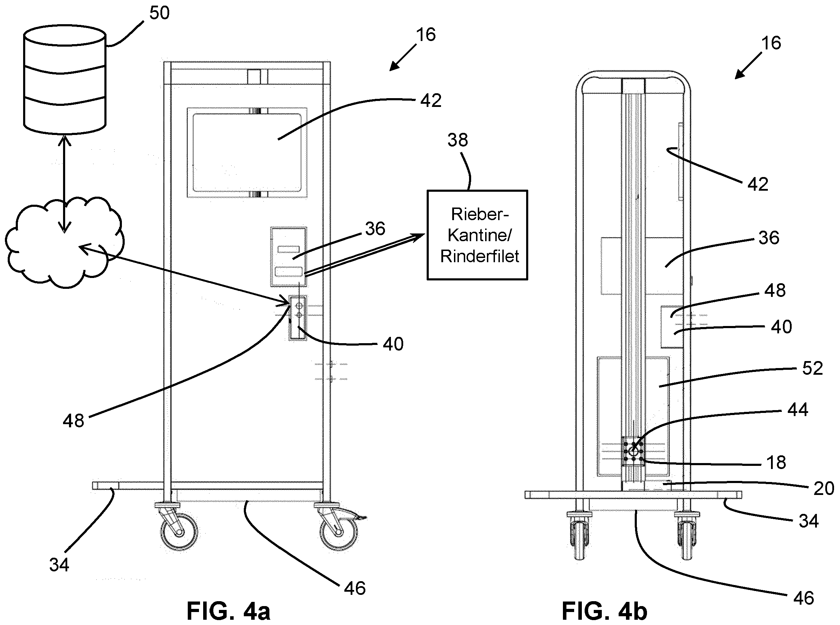

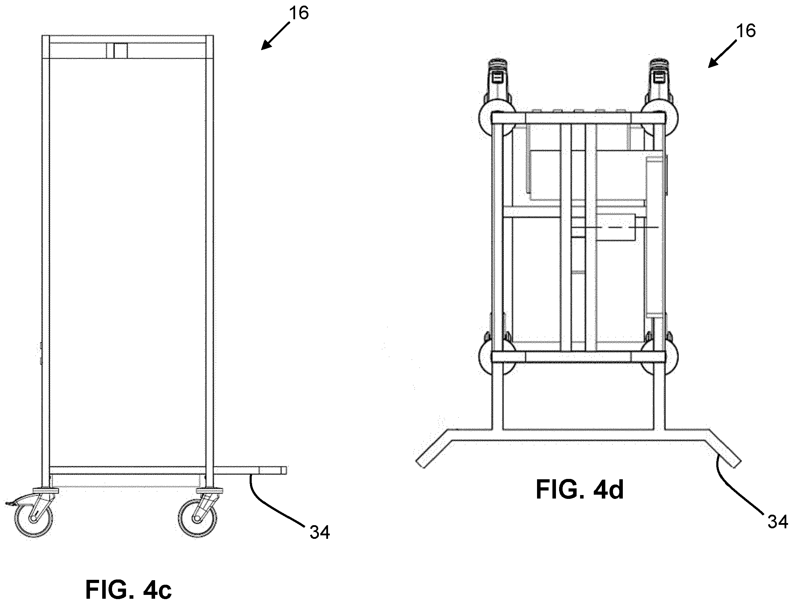

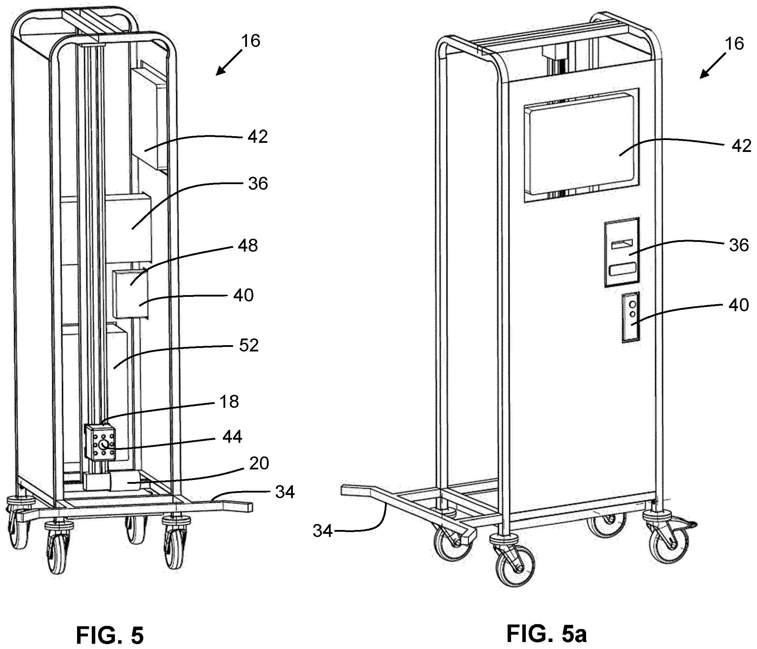

Figur 4a zeigt eine Seitenansicht einer Ausführungsform der erfindungsgemäßen mobilen Plattform 16, Figur 4b zeigt eine Vorderansicht der mobilen Plattform 16 von Figur 4a, Figur 4c zeigt die andere Seitenansicht der mobilen Plattform 16 von Figur 4a, Figur 4d zeigt eine Draufsicht der mobilen Plattform 16 von Figur 4a, Figur 5 zeigt eine perspektivische Darstellung der mobilen Plattform 16 von Figur 4a und Figur 5a zeigt eine weitere perspektivische Darstellung der mobilen Plattform 16 von Figur 4a. Wie dargestellt, ist die mobile Plattform 16 mit vier arretierbaren Laufrädern ausgestattet, so dass sie manuell in der Horizontalen verfahren werden kann. Die mobile Plattform 16 ist mit einer Erfassungseinrichtung 18 ausgestattet, die Lesemittel 44 zum Erfassen der jeweiligen QR-Codes umfasst. Die Lesemittel 44 können beispielsweise durch eine Hochleistungskamera mit automatischer Fokussierung gebildet sein. Die Erfassungseinrichtung 18 und somit die Lesemittel 44 sind mithilfe eines Motors 20 in vertikaler Richtung verfahrbar, wozu der Motor 20 und ein vertikaler Zahnriemen zusammenwirken. Zur Steuerung dieser Antriebs- und Lesemittel ist eine Antriebs- und Lesemittelsteuerung 52 vorgesehen, die durch irgendwelche geeignete Hard- und/oder Software verwirklicht sein kann. Die mobile Plattform 16 ist im dargestellten Fall mit einem hochklappbaren Abstandhalter 34 ausgestattet, der beim Kontakt mit einer Haltevorrichtung 22 (siehe Figuren 1 bis 3a) dafür sorgt, dass sich ein definierter Abstand zwischen den Lesemitteln 44 und den Kennungen 12 ergibt. Weiterhin ist die mobile Plattform 16 mit einem Etikettendrucker 36 ausgestattet, der im dargestellten Fall fest an einer Seitenwand der mobilen Plattform 16 angeordnet ist, um Etiketten ausdrucken zu können, die an der jeweiligen Haltevorrichtung 22 befestigt werden sollen. In Fällen, in denen es erwünscht ist, die einzelnen wiederverwendbaren Lebensmittelbehälter 14 automatisch mit Etiketten zu versehen, kann der Etikettendrucker 36 auch so angeordnet sein, dass er in vertikaler Richtung gemeinsam mit der Erfassungseinrichtung 18 verfahren wird, wobei es dann besonders vorteilhaft ist, wenn der Etikettendrucker 36 so um die vertikale Achse schwenkbar ist, dass er entweder den wiederverwendbaren Lebensmittelbehälter 14 oder einem dann in der Seitenwand der mobilen Plattform 16 vorgesehenen Ausgabeschlitz zugewandt werden kann. Dadurch ist es möglich, wahlweise Etiketten für die Haltevorrichtungen 22 an der Seitenwand der mobilen Plattform 16 auszugeben oder automatisch Etiketten an den wiederverwendbaren Lebensmittelbehältern 14 anzubringen, beispielsweise unterhalb der jeweiligen Kennung 12. Der mobilen Plattform 16 ist weiterhin ein Computer 40 zugeordnet, der über eine drahtlose Datenschnittstelle 48 verfügt. Bei der drahtlosen Datenschnittstelle 48 kann es sich beispielsweise um eine Bluetooth- oder WiFi-Schnittstelle handeln, was nicht ausschließt, dass irgendwelche anderen geeigneten Protokolle zum Einsatz kommen. Im dargestellten Fall dient der Computer 40 insbesondere zur Steuerung des Etikettendruckers 36 und zur Herstellung eines Zugriffs auf eine nur in Figur 4a angedeutete Datenbank 50. Auf die Datenbank 50 kann entweder direkt oder wie dargestellt über ein weiteres Netzwerk zugegriffen werden, beispielsweise über eine Cloud. Es ist ebenfalls möglich, dass die Datenbank 50 Bestandteil einer Cloud ist. Der Computer 40 steht mit einer Mensch/Maschine-Schnittstelle 42 in Verbindung, die im dargestellten Fall durch einen Touchscreen 42 gebildet ist. Um eine optimale Mobilität der mobilen Plattform 16 zu gewährleisten, werden sämtliche elektrische Komponenten der mobilen Plattform 16 von einem Akku 46 versorgt, der bei Nichtgebrauch der mobilen Plattform 16 an einer geeigneten, nicht dargestellten Ladestation aufgeladen werden kann. In Figur 4a ist weiterhin ein Etikett 38 schematisch dargestellt, das von dem Etikettendrucker 36 ausgegeben wurde, um auf einer Haltevorrichtung 22 oder einem wiederverwendbaren Lebensmittelbehälter 14 angebracht zu werden. Bei dem Etikett 38 kann es sich insbesondere um ein rückstandslos entfernbares Klebeetikett handeln, und das Etikett 38 kann beispielsweise den Empfänger der Sendung (im dargestellten Fall die Rieber-Kantine) und den Inhalt der Sendung angeben (im dargestellten Fall Rinderfilet).

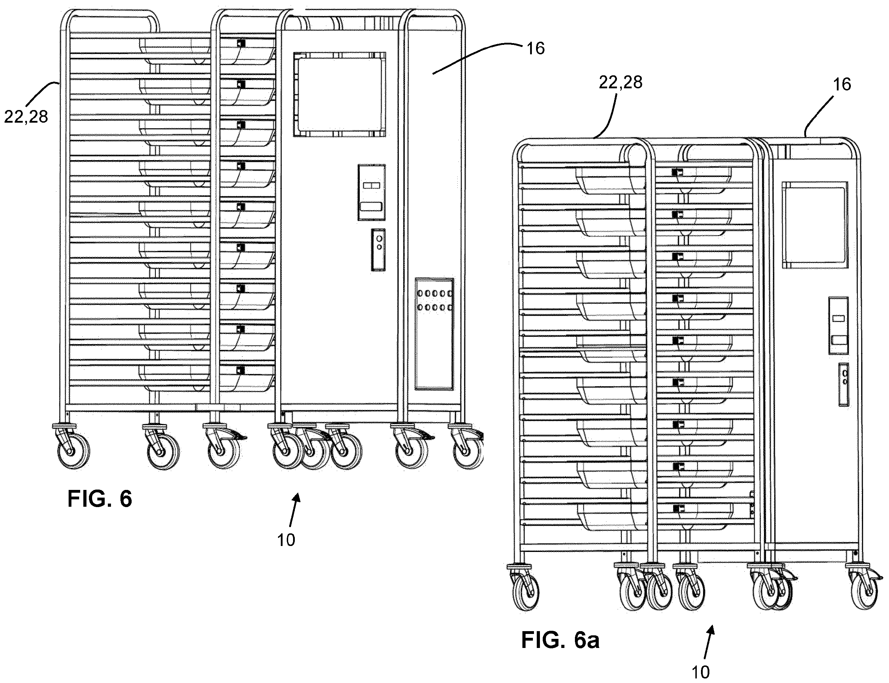

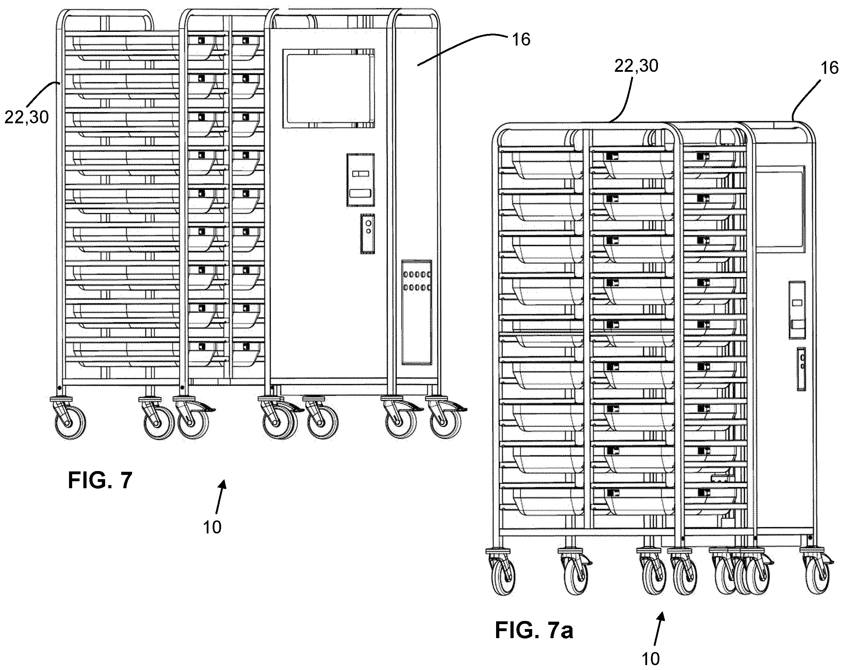

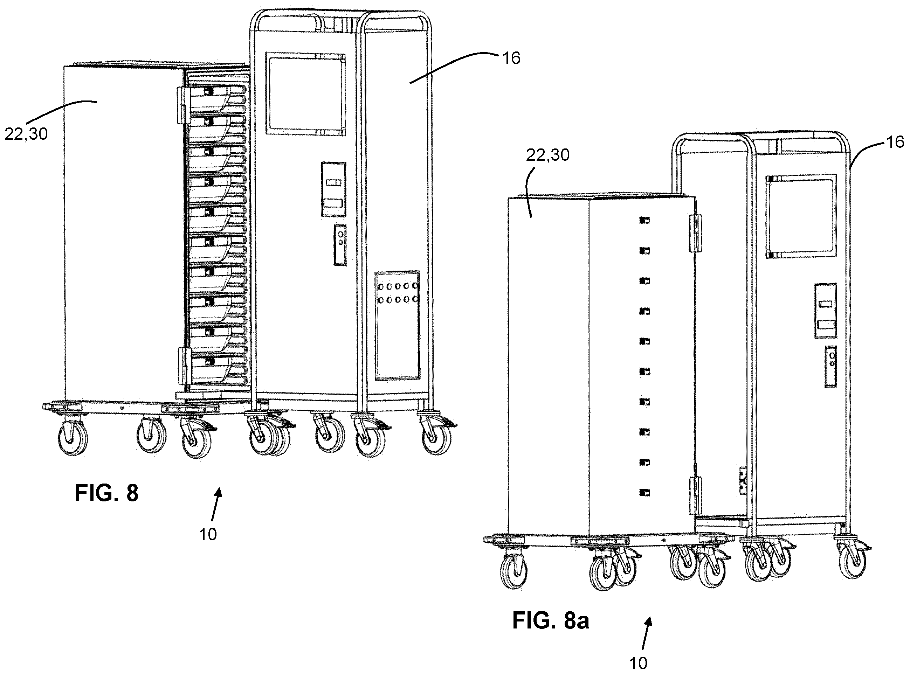

Figur 6 zeigt eine perspektivische Darstellung eines erfindungsgemäßen Systems 10, bestehend aus dem Regalwagen 28 von Figur 1 und der mobilen Plattform 16 aus den Figuren 4a bis 5a, Figur 6a zeigt das System 10 von Figur 6 in einer weiteren perspektivischen Darstellung, Figur 7 zeigt eine perspektivische Darstellung eines erfindungsgemäßen Systems 10, bestehend aus dem Regalwagen 30 von Figur 2 und der mobilen Plattform 16 aus den Figuren 4a bis 5a, Figur 7a zeigt das System 10 von Figur 7 in einer weiteren perspektivischen Darstellung, Figur 8 zeigt eine perspektivische Darstellung eines erfindungsgemäßen Systems 10, bestehend aus der Transportbox 32 von Figur 3 und der mobilen Plattform 16 aus den Figuren 4a bis 5a und Figur 8a zeigt das System 10 von Figur 8 in einer weiteren perspektivischen Darstellung. Den Figuren 6 bis 8a ist gemeinsam, dass sie jeweils eine Ausführungsform des erfindungsgemäßen Systems 10 in Form einer mobilen Plattform 16 zeigen, die an eine Haltevorrichtung 22 für die wiederverwendbaren Lebensmittelbehälter 14 angedockt ist. Dabei wird durch die Anlage des in den Figuren 4a bis 5a dargestellten Abstandhalters 34 sichergestellt, dass sich ein definierter Abstand zwischen der Erfassungseinrichtung 18 beziehungsweise ihren Lesemitteln 44 und den Kennungen 12 der wiederverwendbaren Lebensmittelbehälter 14 ergibt, wenn die Erfassungseinrichtung 18 mithilfe des Motors 20 vertikal so verfahren wurde, dass die Lesemittel einer Kennung 12 eines wiederverwendbaren Lebensmittelbehälters 14 gegenüberliegen. Im Betrieb wird die Erfassungseinrichtung 18 beispielsweise von oben nach unten so verfahren, dass nacheinander alle Kennungen der in der Haltevorrichtung 22 angeordneten wiederverwendbaren Lebensmittelbehälter 14 erfasst werden. Anhand der erfassten Kennungen 12 der wiederverwendbaren Lebensmittelbehälter 14 können Inhalte einer Datenbank 50 beispielsweise aktualisiert werden oder es können zu der jeweiligen Kennung in der Datenbank 50 gespeicherte Angaben zu der mobilen Plattform 16 übertragen werden, beispielsweise um über den Etikettendrucker 36 geeignete Etiketten 38 für die Haltevorrichtung 22 und/oder die einzelnen wiederverwendbaren Lebensmittelbehälter 14 auszugeben, wie dies oben bereits erläutert wurde. Die Datenbank 50 kann dabei zumindest für einige der Kennungen 12 eine oder mehrere der folgenden Angaben enthalten: Besitzer des wiederverwendbaren Lebensmittelbehälters 14, Eigentümer des wiederverwendbaren Lebensmittelbehälters 14, aktuelle übergeordnete Verpackungseinheit des wiederverwendbaren Lebensmittelbehälters 14, Inhalt des wiederverwendbaren Lebensmittelbehälters 14, Solltemperatur des Inhalts des wiederverwendbaren Lebensmittelbehälters 14, Isttemperatur des Inhalts des wiederverwendbaren Lebensmittelbehälters 14, Mindesthaltbarkeitsdatum des Inhalts des wiederverwendbaren Lebensmittelbehälters 14, Weiterverarbeitungsvorschriften für den Inhalt des wiederverwendbaren Lebensmittelbehälters 14, Zieladresse des wiederverwendbaren Lebensmittelbehälters 14, Heimatadresse des wiederverwendbaren Lebensmittelbehälters 14. Das Etikettieren der einzelnen wiederverwendbaren Lebensmittelbehälter 14 wird in der Regel insbesondere dann sinnvoll sein, wenn es sich um (frisch) gefüllte wiederverwendbare Lebensmittelbehälter 14 handelt. In diesem Fall können auch an der Haltevorrichtung 22 Etiketten vorgesehen werden, die beispielsweise (zumindest) lieferscheinartige Angaben enthalten. Aber auch in Fällen, in denen sich in den Haltevorrichtungen 22 vom Kunden zurückkehrende, zu reinigende wiederverwendbare Lebensmittelbehälter 14 befinden, kann es gegebenenfalls sinnvoll sein, beispielsweise die Anzahl der in einer Haltevorrichtung 22 angeordneten wiederverwendbaren Lebensmittelbehälter 14 mithilfe eines Etiketts auf der Haltevorrichtung 22 anzugeben. Gleiches gilt, wenn sich frisch gespülte, jedoch noch leere wiederverwendbare Lebensmittelbehälter 14 in den Haltevorrichtungen 22 befinden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: System
- 12: Kennung
- 14: Lebensmittelbehälter
- 16: mobile Plattform
- 18: Erfassungseinrichtung
- 20: Motor
- 22: Haltevorrichtung
- 24: Auflager
- 26: überstehende Ränder
- 28: Regalwagen
- 30: Regalwagen
- 32: Transportbox
- 34: Abstandhalter
- 36: Etikettendrucker
- 38: Etikett
- 40: Computer
- 42: Mensch/Maschine-Schnittstelle
- 44: Lesemittel
- 46: Akku
- 48: drahtlose Datenschnittstelle
- 50: Datenbank
- 52: Antriebs- und Lesemittelsteuerung

## Patentansprüche

1. System (10) zum automatischen Erfassen von Kennungen (12) von übereinander angeordneten wiederverwendbaren Lebensmittelbehältern (14), mit einer mobilen Plattform (16) und mit einer daran befestigten Erfassungseinrichtung (18), die mit Hilfe zumindest eines Motors (20) zumindest in vertikaler Richtung verfahrbar ist, um die einzelnen Kennungen (12) zu erfassen.

2. System (10) nach Anspruch 1, **dadurch gekennzeichnet, dass** es eine Haltevorrichtung (22) aufweist, in der die wiederverwendbaren Lebensmittelbehälter (14) übereinander angeordnet werden können.

3. System (10) nach Anspruch 2, **dadurch gekennzeichnet, dass** die Haltevorrichtung (22) Auflager (24) für überstehende Ränder (26) der wiederverwendbaren Lebensmittelbehälter (14) aufweist.

4. System (10) nach Anspruch 3, **dadurch gekennzeichnet, dass** die Auflager (24) einen an das Gastro-Norm-Maß angepassten Abstand aufweisen.

5. System (10) nach einem der Ansprüche 2 bis 4, **dadurch gekennzeichnet, dass** die Haltevorrichtung (22) ein Regalwagen ist (28, 30).

6. System (10) nach einem der Ansprüche 2 bis 4, **dadurch gekennzeichnet, dass** die Haltevorrichtung (22) eine thermisch isolierte Transportbox (32) ist.

7. System (10) nach einem der vorhergehenden Ansprüche, **dadurch gekennzeichnet, dass** die mobile Plattform (16) manuell horizontal verfahrbar ist und einen Abstandhalter (34) aufweist, um mit einem definierten Abstand zu übereinander angeordneten wiederverwendbaren Lebensmittelbehältern (14) positioniert zu werden.

8. System (10) nach einem der vorhergehenden Ansprüche, **dadurch gekennzeichnet, dass** der mobilen Plattform (16) weiterhin ein Etikettendrucker (36) zugeordnet ist, um wiederverwendbaren Lebensmittelbehältern (14) in Abhängigkeit von ihren erfassten Kennungen (12) Etiketten (38) zuordnen zu können.

9. System (10) nach Anspruch 8, **dadurch gekennzeichnet, dass** der Etikettendrucker (36) zusammen mit der Erfassungseinrichtung (18) vertikal verfahrbar und dazu eingerichtet ist, zumindest einige der wiederverwendbaren Lebensmittelbehälter (14) in Abhängigkeit von ihrer erfassten Kennung (12) automatisch mit zumindest einem Etikett (38) zu versehen.

10. System (10) nach Anspruch 2, **dadurch gekennzeichnet, dass** der mobilen Plattform (16) weiterhin ein Etikettendrucker (36) zugeordnet ist, um der Haltevorrichtung (22) in Abhängigkeit von den erfassten Kennungen (12) der wiederverwendbaren Lebensmittelbehälter (14) ein oder mehrere Etiketten (38) zuordnen zu können.

11. System (10) nach Anspruch 9, **dadurch gekennzeichnet, dass** der Etikettendrucker (36) dazu eingerichtet ist, Etiketten (38) mit Informationen über die vertikalen Positionen der in der Haltevorrichtung (22) angeordneten wiederverwendbare Lebensmittelbehälter (14) auszudrucken.

12. System (10) nach einem der vorhergehenden Ansprüche, **dadurch gekennzeichnet, dass** der mobilen Plattform (16) weiterhin ein Computer (40) mit einer Mensch/Maschine-Schnittstelle (42) zugeordnet ist.

13. System (10) nach einem der vorhergehenden Ansprüche, **dadurch gekennzeichnet, dass** die Kennungen (12) QR-Codes und/oder Bar-Codes sind, wobei die Erfassungseinrichtung (18) daran angepasste Lesemittel (44) umfasst.

14. System (10) nach einem der vorhergehenden Ansprüche, **dadurch gekennzeichnet, dass** der mobilen Plattform (16) weiterhin ein Akku (46) zugeordnet ist.

15. System (10) nach einem der vorhergehenden Ansprüche, **dadurch gekennzeichnet, dass** der mobilen Plattform (16) weiterhin eine drahtlose Datenschnittstelle (48) zugeordnet ist, über die die mobile Plattform (16) Daten mit einer Datenbank (50) austauschen kann, wobei die Datenbank (50) zumindest für einige der Kennungen (12) eine oder mehrere der folgenden Angaben enthält: Besitzer des wiederverwendbaren Lebensmittelbehälters (14), Eigentümer des wiederverwendbaren Lebensmittelbehälters (14), aktuelle übergeordnete Verpackungseinheit des wiederverwendbaren Lebensmittelbehälters (14), Inhalt des wiederverwendbaren Lebensmittelbehälters (14), Solltemperatur des Inhalts des wiederverwendbaren Lebensmittelbehälters (14), Isttemperatur des Inhalts des wiederverwendbaren Lebensmittelbehälters (14), Mindesthaltbarkeitsdatum des Inhalts des wiederverwendbaren Lebensmittelbehälters (14), Weiterverarbeitungsvorschriften für den Inhalt des wiederverwendbaren Lebensmittelbehälters (14), Zieladresse des wiederverwendbaren Lebensmittelbehälters (14), Heimatadresse des wiederverwendbaren Lebensmittelbehälters (14).
